# EUROPÄISCHE PATENTANMELDUNG

(11) **EP 3 564 069 A1**
(43) Veröffentlichungstag der Anmeldung: **06.11.2019**
(21) Anmeldenummer: 19020241.6
(22) Anmeldetag: 01.04.2019
(51) Int. Cl.: B60N 2/75, B60N 3/10

(54) **ARMAUFLAGE FÜR EINE ARMLEHNE UND ARMLEHNE MIT ARMAUFLAGE**

(30) Priorität: 04.05.2018 DE 102018110819
(71) Anmelder: GRAMMER AG, 92224 Amberg (DE)
(72) Erfinder: Powell, James, Sterling Heights, Michigan 48312 (US); Cahill, Joe, Troy, Michigan 48083 (US); Cubells, Aaron, Detroit, Michigan 48201 (US); Kosnik, Gary, Milford, Michigan 48381 (US); Kromm, Don, Lake Orion, MI 48459 (US)
(74) Vertreter: Roche, von Westernhagen & Ehresmann

(57) **Zusammenfassung**

Armauflage (12) für eine Armlehne (10), umfassend einen Rahmen (19), welcher Befestigungsmittel zur unbewegbaren oder zur bewegbaren Befestiung an einer Struktur, insbesondere an der Struktur eines Fahrzeugs, wobei der Rahmen Längsstreben (23, 24) und Querstreben (21, 22) umfasst, welche mit Verbindern (25, 26, 27, 28) miteinander verbunden sind.

Die Besonderheit besteht darin, dass wenigstens eine erste Art Verbinder vorgesehen ist, welche mit wenigstens einer Längsstrebe (23, 24) ausgewählt aus einem Satz von Längsstreben unterschiedlicher Länge, und / oder mit wenigstens einer Querstrebe (21, 22), ausgewählt aus einem Satz von Querstreben unterschiedlicher Länge, verbindbar ist.

## Beschreibung

Die Erfindung betrifft eine Armauflage für eine Armlehne, insbesondere für eine Armlehne eines Fahrzeugs.

Eine solche Armauflage ist aus offenkundiger Vorbenutzung bekannt. Die Armauflage umfasst einen Grundkörper aus Kunststoff in welchem ggf. Getränkehalter und ein Ablagefach ausgebildet sind. Der Grundkörper ist bewegbar oder fest an der Fahrzeugstruktur gelagert. Mit einem Deckel kann das Alagefach verschlossen werden. Außerdem ist der Grundkörper mit einem Polster versehen.

Es war Aufgabe der Erfindung eine Armauflage zu schaffen, die derart aufgebaut ist, dass sie einfach an unterschiedliche Einsatzfälle anpassbar ist, indem die Größe veränderbar ist und die Bestückung mit Getränkehalter und / oder Aufnahmefach und / oder Deckel wahlweise möglich ist.

Die Aufgabe wird gelöst durch eine Armauflage mit den Merkmalen des Anspruchs 1.

Die Armauflage umfasst einen Rahmen, welcher unbewegbar oder bewegtbar an einer Struktur gelagert ist. Die Struktur ist z.B. eine fest im Fahrzeug angeordnete Struktur. Der Rahmen kann z.B. schwenkbar an der Struktur gelagert sein. Der Rahmen umfasst Längsstreben und Querstreben, welche mit Verbindern miteinander verbunden sind. Der Rahmen umfasst wenigstens eine erste Art Verbinder, welche mit wenigstens einer Längsstrebe aus einem Satz von Längsstreben unterschiedlicher Länge und / oder mit wenigstens einer Querstrebe ausgewählt aus einem Satz von Querstreben unterschiedlicher Länge verbindbar ist.

Auf diese Weise lassen sich allein durch den Austausch von Längsstreben Armauflagen mit unterschiedlicher Länge aber gleicher Breite herstellen. In dem nur die Querstreben ausgetauscht werden, lassen sich Armauflagen gleicher Länge aber unterschiedlicher Breite herstellen. Darüber hinaus lassen sich durch den Austausch der Längs- und der Querstreben die Längen- und Breitenmaße verändern. Die Längsstreben und die Querstreben aus dem jeweiligen Satz von Querstreben und Längsstreben lassen sich frei kombinieren.

Auf diese Weise lassen sich Armauflagen unterschiedlicher Längen- und Breitenmaße herstellen, wobei die übrigen Teile der Armauflage im Wesentlichen unverändert bleiben. Die Teilevorhaltung wird dadurch reduziert.

An dem Rahmen lässt sich z.B. wenigstens ein Einsatz befestigen. Der Einsatz kann z.B. eine Auflagefläche und / oder wenigstens einen Getränkehalter und / oder wenigstens ein Aufnahmefach aufweisen.

Die Aufgabe wird außerdem gelöst mit den Merkmalen des Anspruch 3.

Die Armauflage für eine Armlehne umfasst einen Rahmen, welcher Befestigungsmittel zur unbewegbaren oder zur bewegbaren Befestiung an einer Struktur, insbesondere an der Struktur eines Fahrzeugs, aufweist, entsprechend dem ersten Erfindungsaspekt. Der Rahmen umfasst auch in diesem Fall Längs- und Querstreben, welche mit Verbindern miteinander verbunden sind.

In dem Rahmen ist wenigstens ein Einsatz befestigbar. Der Rahmen weist wenigstens eine Struktur auf, die mit mindestens einer Gegenstruktur des Einsatzes lösbar in Eingriff steht, wobei die Struktur und die Gegenstruktur in unterschiedlichen Relativpositionen miteinander in Eingriff gebracht werden können und eine Adaptervorrichtung zur Befestigung des Einsatzes an dem Rahmen bilden, unabhängig von der Form, d.h. von den Längen- und Breitenmaßen des Rahmens.

Die Struktur weist z.B. eine Mehrzahl von Lamellen auf und die Gegenstruktur weist wenigstens eine Lamelle auf. Alternativ weist die Struktur wenigstens eine Lamelle und die Gegenstruktur weist eine Mehrzahl von parallel zueinander angeordneten, voneinander beabstandeten Lamellen, auf. Die Lamellen der Struktur können mit den Lamellen der Gegenstruktur in unterschiedlichen Relativpositionen in Eingriff gebracht werden, indem die Lamellen der Struktur und die Lamellen der Gegenstruktur ineinander geschachtelt sind oder mit anderen Worten, die Lamelle der Gegenstruktur in einem Zwischenraum zwischen zwei Lamellen der Struktur angeordnet ist und auf diese weise gehalten wird.

Durch den Eingriff der Struktur und der Gegenstruktur können unterschiedliche Relativpositionen zwischen dem Rahmen und dem Einsatz eingestellt und festgelegt werden. Der Einsatz kann sich bei dem Eingriff der Struktur mit der Gegenstruktur in der festgelegten Richtung nicht mehr relativ zu dem Rahmen bewegen. Auf diese Weise kann trotz unterschiedlicher Längen des Rahmens in X-Richtung und / oder in Y-Richtung, ein Einsatz sicher in der Position gehalten werden.

Die nachfolgenden Ausführungsformen beziehen sich sowohl auf den ersten, als auch auf den zweiten Aspekt der Erfindung. Gemäß einer Ausführungsform ist der Verbinder mit wenigstens zwei Stecksitzen versehen, wobei jeweils eine Strebe in den Stecksitz einsteckbar ist. Die Stecksitze können zur Aufnahme einer bestimmten Querschnittform einer Strebe oder alternativ oder zusätzlich derart ausgebildet sein, dass ein erster Stecksitz für die Aufnahme einer ersten Querschnittform und wenigstens ein zweiter Stecksitz für die Aufnahme einer zweiten Querschnittform einer Strebe ausgebildet ist. In einer einfachen Ausführung besitzen alle Längsstreben und Querstreben den gleichen Querschnittform und die Stecksitze aller Verbinder sind entsprechend zur Aufnahme einer bestimmten Querschnittform ausgebildet. Z.B. sind zwei oder drei Stecksitze an den Verbindern ausgebildet. Es können aber auch mehrere Stecksitze an einem Verbinder ausgebildet sein.

Gemäß einer Ausführungsform ist wenigstens ein Verbinder mit einem Achsfortsatz oder mit einem Sitz zur Montage eines Achselements ausgebildet ist. In dem Fall, dass die Armauflage schwenkbar an einer Fahrzeugstruktur gehalten ist, werden Mittel benötigt, die eine Schwenkachse definieren. Dafür müssen erste Achsmittel an der Armauflage vorgesehen sein und zweite Achsmittel, die der Fahrzeugstruktur zugeordnet sind. Die ersten Achsemittel umfasssen z.B. einen Zapfen, dessen Längsmittelachse z.B. quer zur Längsrichtung der Armauflage ausgebildet ist. An wenigstens einer Art Verbinder kann z.B. ein Sitz zur Befestigung der Achsmittel ausgebildet sein. An dem Verbinder sind z.B. Aussparungen zur Aufnahme des Zapfens ausgebildet. Alternativ kann der Zapfen an dem Verbinder angeformt sein. Alternativ kann der Zapfen auch an der Fahrzeugstruktur angeformt oder befestigt sein.

Gemäß einer Ausführungsform ist wenigstens ein Einsatz an dem Rahmen befestigbar. Der Einsatz kann z.B. von einem Getränkehalter, von einem Ablagefach oder von einem Platzhalter gebildet sein, der z.B. die Form der Außenfläche der Armauflage wenigstens teilweise definiert.

Die Größe wenigstens eines Einsatzes ist z.B. konstant. Auf diese Weise wird die Teilevorhaltung weiter minimiert.

Der Einsatz ist z.B. mittels einer Adaptervorrichtung unabhängig von den Längs- und Querdimensionen des Rahmens an dem Rahmen lagerbar, wobei der Rahmen, insbesondere der Verbinder, eine Struktur aufweist, die mit einer Gegenstruktur des Einsatzes in Eingriff bringbar ist.

Z.B. weist wenigstens ein Einsatz einen Kragen auf, welcher mit Auflageflächen versehen ist, die mit Gegenflächen des Rahmens zusammenwirken.

Alternativ oder zusätzlich weist z.B. die Adaptervorrichtung wenigstens einen Steg oder eine Wand auf, welche mit einer Lamellenstruktur, umfassend mehrere Wände, in Eingriff gebracht werden kann. Die Wände der Lamellenstruktur sind z.B. parallel zueinander. Der Steg kann sich z.B. bei dieser Ausführungsform entgegen der Einsteckrichtung V-förmig verbreitern. Gemäß einer Alternative können die Wände derart ausgebildet sein, dass die Zwischenräume zwischen den Wänden sich in Einsteckrichtung des Steges V-förmig verengen. Z.B. weist der Einsatz den Steg und der Rahmen die Lamellenstruktur auf. Gemäß einer Alternative oder zusätzlich weist der Einsatz die Lamellenstruktur und der Rahmen den Steg auf.

Die Armauflage weist z.B. eine Verriegelungsvorrichtung zur Verriegelung des Einsatzes an dem Rahmen auf, welche dem Einsatz zugeordnete erste Verriegelungsmittel und dem Rahmen zugeordnete zweite Verriegelungsmittel umfasst. Mit der Verriegelungsvorrichtung kann der Einsatz mittelbar oder unmittelbar an dem Rahmen befestigt werden.

Außerdem betrifft die Erfindung eine Armlehne für einen Sitz, insbesondere für einen Fahrzeugsitz. Die Armlehne umfasst eine feste Struktur, wie z.B. einen Halter. An der festen Struktur ist die Armauflage bewegbar, insbesondere schwenkbar, oder fest gelagert. Die Armauflage ist eine Armauflage gemäß dem ersten Aspekt der Erfindung. Bezüglich der Vorteile wird - um Wiederholungen zu vermeiden - auf den ersten Erfindungsaspekt verwiesen.

Weitere Vorteile ergeben sich anhand der Beschreibung eines in den Fig. schematisch dargestellten Ausführungsbeispiels. Es zeigen:
Fig. 1 eine Draufsicht auf die Armlehne in der Gebrauchsposition,
Fig. 2a eine Explosionsdarstellung der Armlehne,
Fig. 2b eine Ausschnittdarstellung gemäß Ausschnittlinie F in Fig. 2a,
Fig. 3 eine Explosionsdarstellung eines Rahmens der Armlehne,
Fig. 4 eine Seitenansicht der Armlehne in einer Nichtgebrauchsposition, wobei eine Gebrauchsposition angedeutet dargestellt ist,

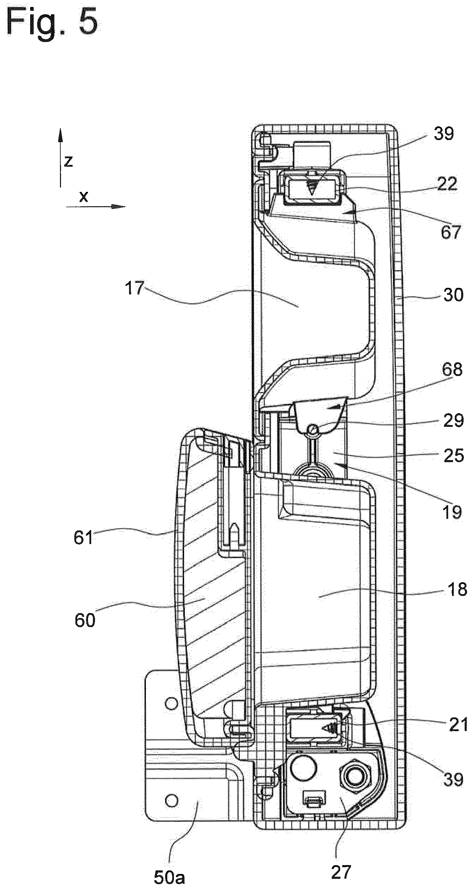

Fig. 5 eine Schnittdarstellung der Armlehne gemäß Schnittlinie A - A in Fig. 1, wobei sich die Armlehne in der in Fig. 2 dargestellten Nichtgebrauchsposition befindet,

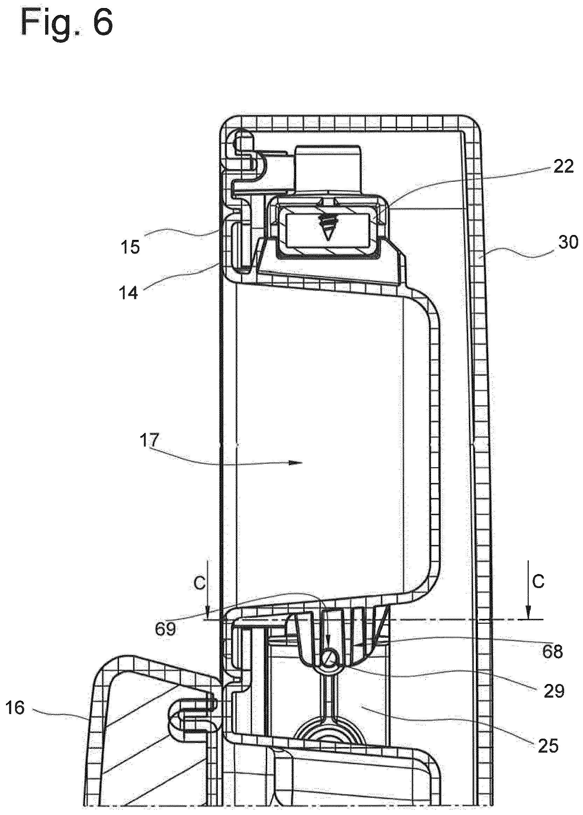

Fig. 6 eine Schnittdarstellung gemäß Schnittlinie B - B in Fig. 1,
Fig. 7 eine Schnittdarstellung gemäß Schnittlinie C - C in Fig. 6,
Fig. 8 eine Draufsicht auf einen Endbereich der Armlehne, wobei lediglich ein Teil des Rahmens und ein Getränkeeinsatz dargestellt sind,
Fig. 9 eine Schnittansicht gemäß Schnittlinie D - D in Fig. 8, und

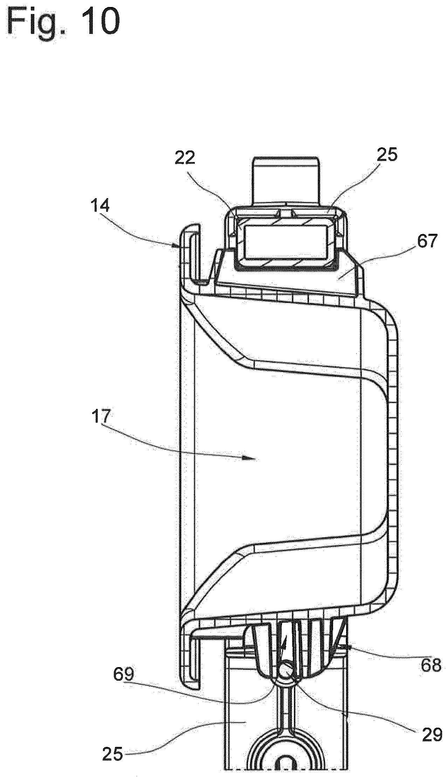

Fig. 10 eine Schnittansicht gemäß Schnittlinie E - E in Fig. 8,

Die Armlehne insgesamt ist in den Fig. mit dem Bezugszeichen 10 bezeichnet. Gleiche Bezugszeichen in den unterschiedlichen Fig. bezeichnen entsprechende Merkmale, auch wenn kleine Buchstaben nachgestellt oder weggelassen sind.

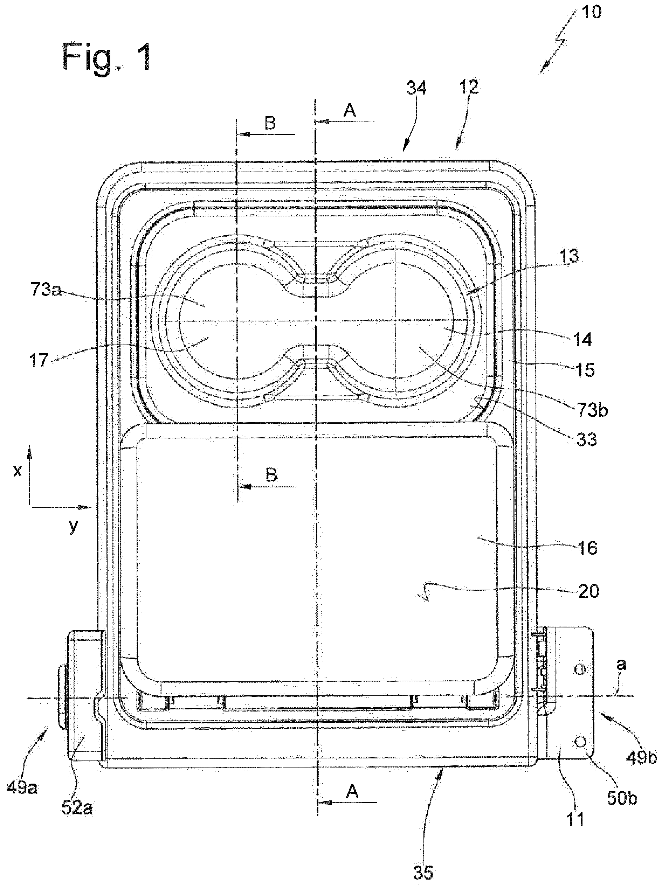

In Fig. 1 ist eine Draufsicht auf die Armlehne 10 gezeigt. Sie umfasst eine Basis 11, von welcher in Fig. 1 nur Lageranordnungen 49a und 49b dargestellt sind. Die Basis 11 stellt eine feste Struktur dar, die ortsfest ist oder z.B. an einem Fahrzeug fest angeordnet ist. Ferner ist eine Armauflage 12 umfasst, welche um eine Schwenkachse a schwenkbar gelagert ist. Die Armauflage 12 ist mit einer Aufnahmevorrichtung 13 versehen, die im vorliegenden Ausführungsbeispiel Einsätze 14 und 15 umfasst. In dem Einsatz 15 ist z.B. ein Aufnahmefach ausgebildet, welches in Fig. 1 nicht erkennbar ist, da es von einem Deckel 16 verschlossen ist. Der Deckel 16 bildet eine Armauflagefläche 20 aus. Ferner ist in dem Einsatz 15 eine Aussparung 33 ausgebildet, welche von dem Einsatz 14 verdeckt ist, wobei der Einsatz 14 in der Aussparung 33 aufgenommen und einen Rand 74 der Aussparung 33 übergreift.

In dem Einsatz 14 ist eine Vertiefung 17 eingeformt, welche zwei Halterungen 73a und 73b zur Aufnahme von Getränkegefäßen ausbildet. Die Vertiefung 17 ist einem freien Endbereich 34 der Armauflage 12 zugewandt. An einem dem freien Endbereich 34 gegenüberliegenden Ende 35 der Armauflage 12 ist die Armauflage 12 an der Basis 11 gelagert.

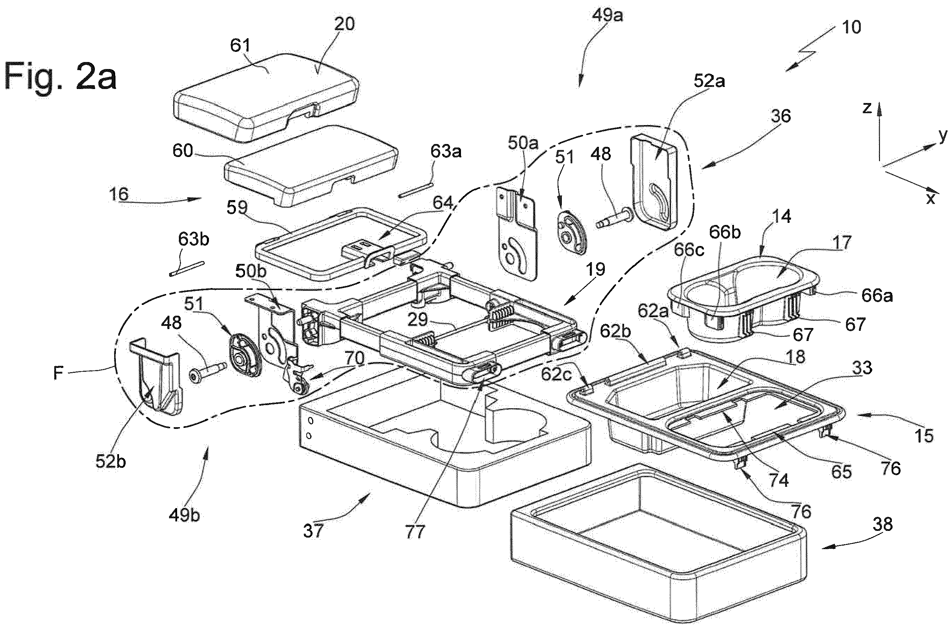

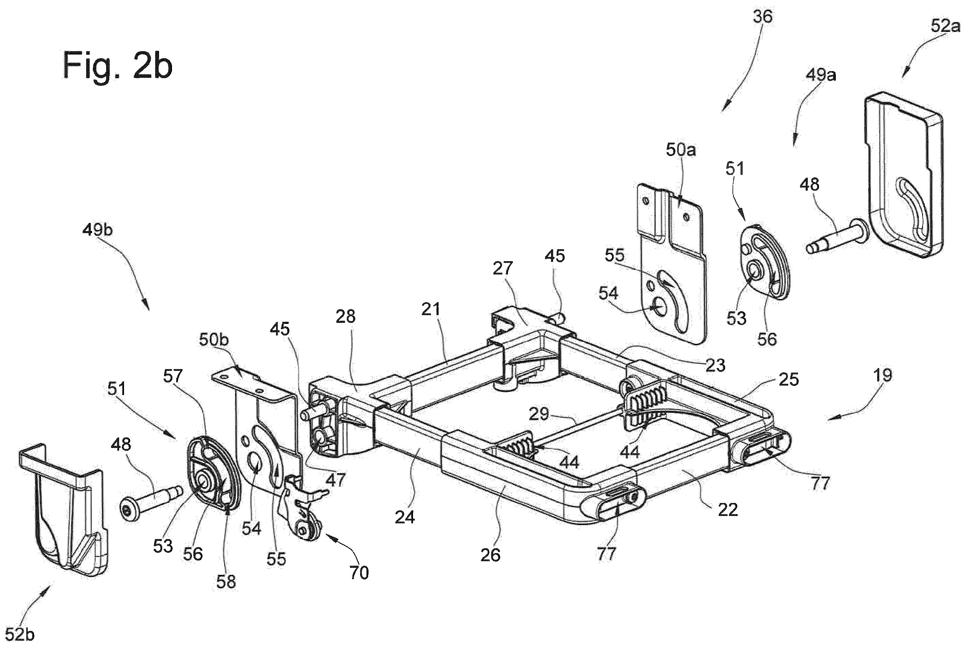

In der Explosionsdarstellung gemäß Fig. 2 ist erkennbar, dass die Armlehne 10 einen Rahmen 19, die Einsätze 14 und 15, eine Lagervorrichtung 36 mit Lageranordnungen 49a und 49b, den Deckel 16 sowie einen Schaumkörper 37 und eine Blende 38 umfasst.

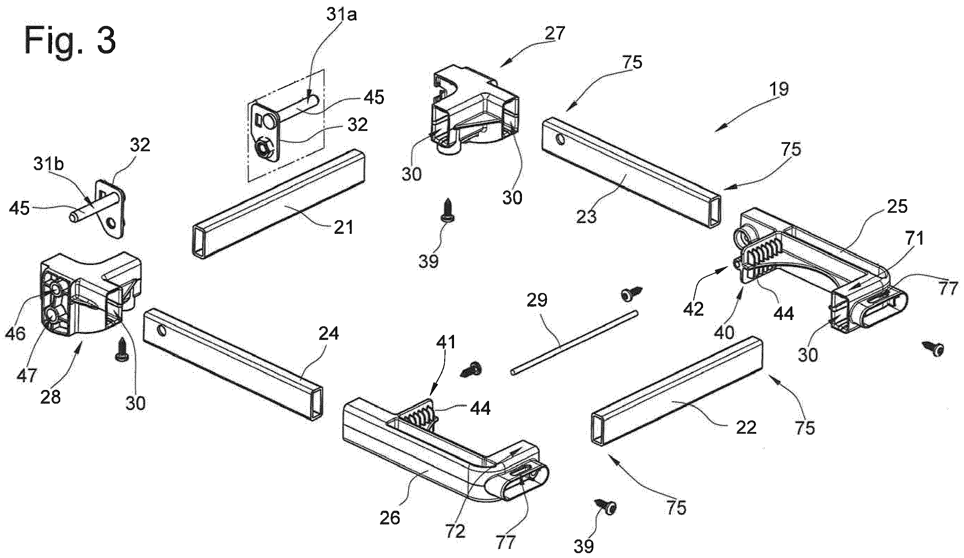

Eine Explosionsdarstellung des Rahmens 19 ist in Fig. 3 gezeigt. Der Rahmen 19 weist Stege 21, und 22 sowie 23 und 24 auf. Die Stege 21, 22 sind aus einem ersten Satz von Stegen mit unterschiedlichen Steglängen ausgewählt. Die Stege 23 und 24 sind aus einem zweiten Satz von Stegen mit unterschiedlichen Steglängen ausgewählt. Der Steg 22 ist an Verbindern 25 und 26 befestigt und der Steg 21 ist an Verbindern 27 und 28 befestigt. Der Steg 23 ist an den Verbindern 25 und 27 und der Steg 24 an den Verbindern 26 und 28 befestigt.

Die Befestigung erfolgt im vorliegenden Ausführungsbeispiel, indem eine Schraube 39 durch eine Öffnung des jeweiligen Verbinders 25, 26, 27 oder 28 geführt und in den Steg eingeschraubt wird. Alternativ kann jede denkbare andere formschlüssige, kraftschlüssige oder stoffschlüssige Befestigung verwendet werden.

Alternativ zu der dargestellten Ausführung könnte wenigstens ein Paar der Stegpaare 21 und 22 / 23 und 24 eine andere Länge aufweisen. Die Verbinder 25, 26, 27 und 28 sind für alle Größenvarianten des Rahmens 19 immer gleich ausgebildet. Auf diese Weise lassen sich mit wenigen Teilen Armauflagen unterschiedlicher Größe herstellen, die sich hinsichtlich ihrer Längenmaße und / oder hinsichtlich ihrer Breitenmaße unterscheiden.

Die Verbinder 25, 26, 27 und 28 sind jeweils mit zwei Stecksitzen 30 versehen, in welche Endbereiche 75 der Stege 21, 22, 23, 24 einsteckbar sind. Die Stecksitze 30 jedes Verbinders 25, 26, 27 und 28 sind in einem 90°-Winkel zueinander ausgebildet. Wenn sich der Endbereich 75 in der vorgesehenen Position in dem Stecksitz 30 befindet, wird er mittels der Schraube 39 in seiner Position relativ zu dem Stecksitz 30 gehalten und daran gehindert, sich aus dem dem Stecksitz 30 herauszubewegen.

Der Verbinder 25 bildet einen Vorsprung 40 und der Verbinder 26 bildet einen Vorsprung 41 aus. Die Vorsprünge 40 und 41 sind zur Halterung und Stabilisierung der Einsätze 14 und 15 vorgesehen. Die Vorsprünge 40 und 41 umfassen jeweils einen Stangensitz 42 welcher eine Stange 29 in dem fertig montierten Rahmen 19 aufnimmt. Außerdem ist in jedem Vorsprung 40, 41 eine Struktur 44 ausgebildet, die mehrere voneinander beabstandete, sich in Z-Richtung erstreckende starre Lamellen 43 aufweist.

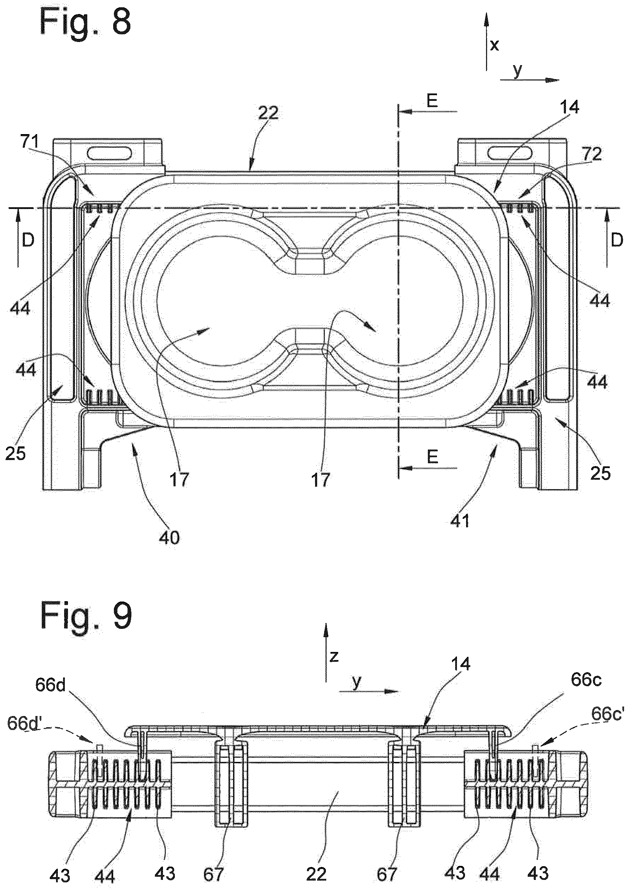

An einem Bereich 71 des Verbinders 25 (siehe z.B. Fig. 8) und einem Bereich 72 des Verbinders 26 ist ebenfalls jeweils eine Struktur 44 ausgebildet. Die Struktur 44 des Vorsprungs 40 und die Struktur 44 des Bereichs 71 sind einander zugewandt und bezüglich der Aussparung 33 gegenüberliegend angeordnet. In gleicher Weise sind die Struktur 44 des Vorsprungs 41 und die Struktur 44 des Bereichs 72 einander zugewandt und bezüglich der Aussparung 33 gegenüberliegend angeordnet.

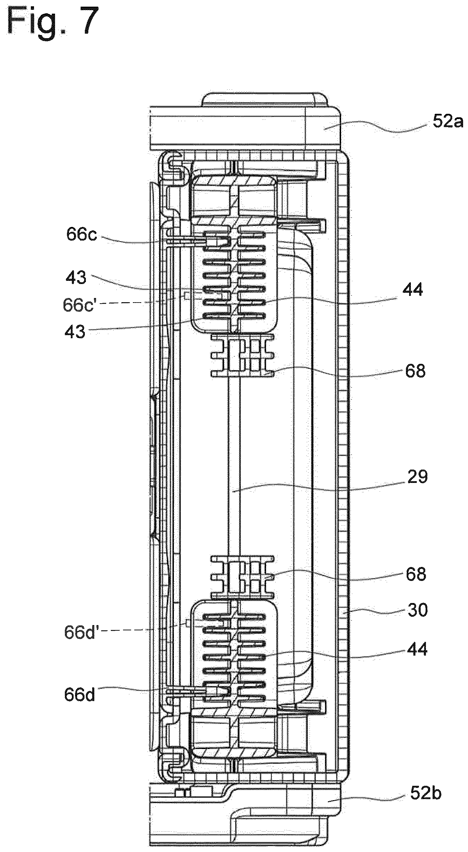

In den Fig. 2 und 7 bis 9 ist erkennbar, dass der Einsatz 14 mit vier Gegenstrukturen 66a, 66b, 66c und 66d versehen ist, die im vorliegenden Ausführungsbeispiel in Form einer vertikalen Rippe ausgebildet sind. Jede Gegenstruktur 66c und 66d greift gemäß Fig. 9 zwischen zwei Lamellen 43 der Struktur 44 und positionieren damit den Einsatz 14 bezüglich der Richtung y. Die Gegenstrukturen 66a bis 66d können auf diese Weise durch eine Bewegung in Richtung der Z-Achse gem. Fig. 9 mit den jeweiligen Strukturen 44 in Eingriff gebracht und gelöst werden.

In dem Verbinder 27 (siehe Fig. 3) ist ein Sitz für ein Anschlagelement 31a und in dem Verbinder 28 ist ein Sitz für ein Anschlagelement 31b ausgebildet. Jedes Anschlagelement 31a und 31b umfasst einen Flansch 32 sowie einen von dem Flansch 32 vorragenden Stift 45. Die Anschlagelemente 31a und 31b sind spiegelbildlich ausgebildet. Im montierten Zustand durchgreift der Stift 45 des Anschlagelements 31a ein Durchgangsloch 46 (in Fig. 3 nicht erkennbar) in dem Verbinder 27 und der Stift 45 des Anschlagelements 31b durchgreift ein Durchgangsloch 46 in dem Verbinder 28 und steht lateral nach außen vor. Die Anschlagelemente 31a und 31b sind Teil der Lagervorrichtung 36.

An dem Verbinder 28 ist außerdem ein Achsaufnahmeloch 47 zur Aufnahme eines Achsstifts 48 ausgebildet, der z.B. in Fig. 2 erkennbar ist. In gleicher Weise ist an dem Verbinder 27 ein Achsaufnahmeloch 47 zur Aufnahme eines Achsstiftes 48 ausgebildet.

Gemäß Fig. 2b umfasst die Lagervorrichtung 36 auf beiden Seiten der Armauflage 12 angeordnete Lageranordnungen 49a und 49b. Jede der Lageranordnungen 49a und 49b umfasst ein Kulissenteil 50, welches bei dem Ausführungsbeispiel aus Metallblech gefertigt ist, eine Maske 51, den Achsstift 48 sowie eine Abdeckung 52a bzw. 52b.

Der Achsstift 48 durchgreift eine Durchgangsöffnung 53 der Maske 51 sowie eine Durchgangsöffnung 54 des Kulissenteils 50a bzw. 50b und greift in das Achsaufnahmeloch 47 des jeweiligen Verbinders 27 bzw. 28 ein. Der Achsstift 48 und das Achsaufnahmeloch 47 definieren auf diese Weise die Schwenkachse a.

Der exzentrisch zu dem Achsaufnahmeloch 47 angeordnete Stift 45 durchgreift ein Langloch 55 in dem Kulissenteil 50a bzw. 50b sowie ein Langloch 56 in der Maske 51. Die Langlöcher 55 und 56 bilden eine Kulisse, mit welcher der Schwenkradius der Armauflage 12 bestimmt wird. Das Langloch 55 gibt den maximalen Schwenkradius der Armauflage 12 der Armlehne 10 vor. Das Kulissenteil 50a bzw. 50b ist bei allen Armlehnenvarianten gleich ausgebildet. Mit dem in der Maske 51 ausgebildeten Lanloch 56 werden die Endpositionen der Schwenkbahn der Armauflage der jeweiligen Variante der Armlehne 10 festgelegt. Die Maske 51 wird für die jeweilige Armlehnenvariante aus einem Satz unterschiedlicher Masken 51 ausgewählt, bei welchen der Schwenkwinkel durch die Länge und Lage des Langlochs 56 relativ zu Befestigungsmitteln, die der Befestigung der Maske 51 an dem Kulissenteil dienen, verschieden ist. Die Endpositionen der Armauflage 12 ergeben sich durch den Anschlag des Stiftes 45 an einem ersten Endbereich 57 und einem zweiten Endbereich 58 des Langlochs 56. Die Abdeckung 52 verhindert einen Kontakt mit den beweglichen Teilen der jeweiligen Lageranordnung 49a und 49b und bildet eine Blende, die den Blick auf die Teile 45, 48, 50 und 51 der Lageranordnung abschirmt.

Der Deckel 16 umfasst eine Deckelbasis 59, ein Schaumteil 60 und eine Deckelschale 61. Das Schaumteil 60 und die Deckelbasis 59 sind in die Deckelschale 61 eingesetzt und daran befestigt, z.B. verklebt oder verschraubt, so dass die Teile 59, 60 und 61 eine Baueinheit bilden.

Der Einsatz 15 umfasst Vorsprünge 62a, 62b und 62c, welche jeweils eine Bohrung enthalten, wobei die Bohrungen der Vorsprünge 62a, 62b und 62c miteinander fluchten. An der Deckelbasis 59 sind nicht dargestellte Vorsprünge mit Bohrungen ausgebildet. Zur schwenkbaren Lagerung wird der Gelenkstift 63a durch die Bohrung des Vorsprungs 62a, durch einen Vorsprung der Deckelbasis 59 und in die Bohrung 62b gesteckt. In gleicher Weise ist der Gelenkstift 63b durch die Bohrung des Vorsprungs 62c, durch einen zweiten Vorsprung der Deckelbasis 59 und in die Bohrung 62b gesteckt.

In Fig. 2 ist ein Massenträgheitsriegel 70 erkennbar, welcher bei einer starken Beschleunigung der Armauflage 12 eine weitere Bewegung der Armauflage 12 verhindert.

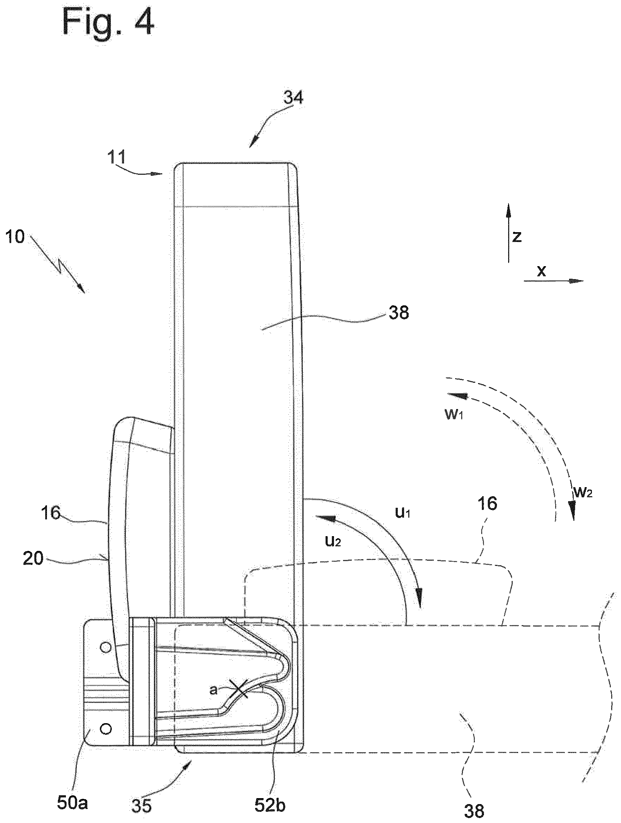

Die Deckelbasis 59 weist erste Verriegelungsmittel 64 auf, die mit zweiten Verriegelungsmitteln 65 des Einsatzes 15 lösbar in Eingriff gebracht werden können um den Deckel 16, mit welchem die Vertiefung 18 verschließbar ist, in der geschlossenen Position zu verriegeln oder zu lösen. Nach dem Lösen kann der Deckel 16 in in Richtung w1 in eine offene Position geschwenkt werden, die in den Fig. nicht dargestellt ist. Aus der offenen Position kann der Deckel 16 gemäß Fig. 4 in Richtung w2 in eine geschlossene Position geschwenkt werden.

Aus Fig. 4 ist darüber hinaus ersichtlich, dass die Armauflage 12 relativ zu den Lageranordnungen 49a und 49b in die Richtungen u1 und u2 schwenkbar ist.

Die Montage der Armlehne 10 wird wie folgt durchgeführt. Nachdem die Stege 21, 22, 23 und 24 in der gewünschten Größe aus dem jeweiligen Satz von Stegen ausgewählt wurde, werden die Stege an den Verbindern 25, 26, 27 und 28 montiert und mit einer Schraube 39 aneinander befestigt. Dabei wird, wenn erforderlich, auch die Stange 29 montiert. Die Stange 14 könnte z.B. auch weggelassen werden, wenn die Armlehne keinen Einsatz 14 aufweisen soll.

Der wie zuvor beschrieben vormontierte Deckel 16 wird an dem Einsatz 15 befestigt.

Anschließend werden die Einsätze 15 und 14 an dem Rahmen 19 montiert, wobei zunächst der Einsatz 15, welcher den Strukturen 67 entsprechende Strukturen aufweist, die nicht dargestellt sind, mit dem Steg 21 in Eingriff gebracht wird. Anschließend werden Rastvorsprünge 76 mit Rastaufnahmen 77 in Eingriff gebracht und verrastet.

Der Einsatz 14 wird montiert, indem c-förmige Haltestrukturen 67 des Einsatzes 14 mit dem Steg 22 in Eingriff gebracht werden und eine Haltestruktur 68 mit der Stange 29 verrastet wird, so dass die Stange 29 in einer Aussparung 69 der Haltestruktur 68 angeordnet ist.

Um den Einsatz bezüglich der X-Richtung an dem Rahmen 19 zu fixieren, wird jede Gegenstruktur 66a, 66b, 66c und 66d mit einer der Strukturen 44 in Eingriff gebracht, wobei der Einsatz derart zwischen zwei Lamellen 43 angeordnet wird, dass er bezüglich seiner X-Ausrichtung mittig zwischen den Verbindern 25 und 26 fixiert ist (siehe die Fig. 8 und 9).

Bei einer alternativen Ausführung des Rahmens 19, bei welcher die Stege 21 und 22 die größte Breite aufweisen, würden die Gegenstrukturen 66c und 66d in den Strukturen 44 eine Position einnehmen, die mit 66c' und 66d' bezeichnet ist.

Im Anschluss werden der Schaumkörper 37 und die Blende 38 montiert. Die fertig montierte Armauflage 12 wird dann mit der Lagervorrichtung 36 an der Basis 11 des Fahrzeugs befestigt.

## Patentansprüche

1. Armauflage (12) für eine Armlehne (10), umfassend einen Rahmen (19), welcher Befestigungsmittel zur unbewegbaren oder zur bewegbaren Befestiung an einer Struktur, insbesondere an der Struktur eines Fahrzeugs, wobei der Rahmen Längsstreben (23, 24) und Querstreben (21, 22) umfasst, welche mit Verbindern (25, 26, 27, 28) miteinander verbunden sind, **dadurch gekennzeichnet, dass** wenigstens eine erste Art Verbinder vorgesehen ist, welche mit wenigstens einer Längsstrebe (23, 24), ausgewählt aus einem Satz von Längsstreben unterschiedlicher Länge, und / oder mit wenigstens einer Querstrebe (21, 22), ausgewählt aus einem Satz von Querstreben unterschiedlicher Länge, verbindbar ist.

2. Armauflage nach einem der vorangehenden Ansprüche, **dadurch gekennzeichnet, dass** wenigstens ein Einsatz (14, 15) an dem Rahmen (19) befestigbar ist.

3. Armauflage nach dem Oberbegriff des Anspruchs 1, wobei in dem Rahmen (19) wenigstens ein Einsatz (14, 15) befestigbar ist, **dadurch gekennzeichnet, dass** der Rahmen (19) eine Struktur (44) aufweist, die mit einer Gegenstruktur (66a, 66b, 66c, 66d) des Einsatzes (14) lösbar in Eingriff steht, wobei die Struktur (44) und die Gegenstruktur (66a, 66b, 66c, 66d) in unterschiedlichen Relativpositionen miteinander in Eingriff gebracht werden können und eine Adaptervorrichtung zur Befestigung des Einsatzes (14) an dem Rahmen (19) bilden, unabhängig von der Form des Rahmens (19).

4. Armauflage nach Anspruch 3, **dadurch gekennzeichnet, dass** die Struktur (44) eine Mehrzahl von parallel zueinander angeordneten, voneinander beabstandeten Lamellen (43) aufweist und die Gegenstruktur (66) wenigstens eine Lamelle (43) umfasst oder dass die Struktur wenigstens eine Lamelle und die Gegenstruktur eine Mehrzahl von parallel zueinander angeordneten, voneinander beabstandeten Lamellen aufweist.

5. Armauflage nach einem der vorangehenden Ansprüche, **dadurch gekennzeichnet, dass** der Verbinder (25, 26, 27, 28) mit wenigstens zwei Stecksitzen (30) versehen ist, wobei jeweils mindestens eine Längsstrebe (23, 24) und / oder eine Querstrebe (21, 22) in den Stecksitz (30) einsteckbar ist.

6. Armauflage nach einem der vorangehenden Ansprüche, **dadurch gekennzeichnet, dass** wenigstens ein Verbinder (25, 26, 27, 28) mit einem Achsfortsatz oder mit einem Sitz (47) zur Montage eines Achselements (48) ausgebildet ist.

7. Armauflage nach einem der vorangehenden Ansprüche, **dadurch gekennzeichnet, dass** die Größe des Einsatzes (14, 15) konstant ist und dass der Einsatz (14, 15) erste Adaptermittel aufweist, die mit zweiten Adaptermitteln des Rahmens (19) in Eingriff bringbar sind und eine Adaptervorrichtung zur Lagerung an dem Rahmen (19) unabhängig von dessen Längs- und Querdimensionen.

8. Armauflage nach einem der vorangehenden Ansprüche, **dadurch gekennzeichnet, dass** eine Verriegelungsvorrichtung zur Verriegelung des Einsatzes (14, 15) an dem Rahmen (19) vorgesehen ist, welche erste Verriegelungsmittel des Einsatzes (14) und zweite Verriegelungsmittel des Rahmens (19) umfasst.

9. Armauflage nach einem der vorangehenden Ansprüche, **dadurch gekennzeichnet, dass** der Einsatz (14, 15) wenigstens ein Aufnahmefach umfasst und dass wenigstens ein Aufnahmefach mittels eines Deckels (16) verschließbar ist.

10. Armlehne (10) mit einer Armauflage (12) nach einem der vorangehenden Ansprüche.

11. Armlehne nach Anspruch 10, **dadurch gekennzeichnet, dass** der Rahmen (19) schwenkbar an der Basis gelagert ist und eine Vorrichtung zur Begrenzung der Schwenkbahn aufweist, die erste dem Rahmen zugeordnete Begrenzungsmittel und zweite der Basis zugeordnete Begrenzungsmittel umfasst.

12. Armlehne nach Anspruch 10 oder 11, **dadurch gekennzeichnet, dass** die einen Begrenzungsmittel von einem Stift gebildet sind und die anderen Begrenzungsmittel von einer Kulissenvorrichtung gebildet sind, wobei die Bewegung des Stiftes von Endbereichen der Kulisse begrenzt ist und dass die Kullissenvorrichtung ein Kulissenteil aufweist, an welchem ein Sitz zur Befestigung einer Maske ausgebildet ist und wobei die Maske die Endbereiche definiert.

13. Armlehne nach Anspruch 10 oder 11, **dadurch gekennzeichnet, dass** aus einem Satz unterschiedlicher Masken eine auswählbar und an dem Kulissenteil befestigbar ist.
